# EUROPÄISCHE PATENTSCHRIFT

(11) **EP 0 974 275 B1**
(45) Veröffentlichungstag und Bekanntmachung des Hinweises auf die Patenterteilung: **20.03.2002**
(21) Anmeldenummer: 99112889.3
(22) Anmeldetag: 03.07.1999
(51) Int. Cl.: A23L 3/16, A23G 1/02

(54) **Verfahren zur Sterilisation**
Sterilisation process
Procédé de stérilisation

(30) Priorität: 18.07.1998 DE 19832415
(43) Veröffentlichungstag der Anmeldung: 26.01.2000
(73) Patentinhaber: FRANZ ZENTIS GMBH & CO., 52070 Aachen (DE)
(72) Erfinder: Otte, Dietmar, Dipl.-Ing., 52076 Aachen (DE); Brack, Holger, Dipl.-Ing., 52159 Roetgen (DE)
(74) Vertreter: Bauer, Hubert, Dipl.-Ing.

(56) Entgegenhaltungen:
- EP-A- 0 770 332
- CH-A- 686 810
- DE-A- 2 513 563
- DE-A- 3 111 352
- DE-A- 4 341 316
- US-A- 3 721 527
- US-A- 4 062 646

## Beschreibung

Die Erfindung betrifft ein Verfahren zur Sterilisation eines bei Raumtemperatur festen Lebensmittels, das mindestens Fett und Zucker enthält und dessen Wassergehalt weniger als 5 Gew.% beträgt.

Ein derartiges Lebensmittel ist beispielsweise Schokolade oder eine ähnliche kakaohaltige Masse, deren Zusammensetzung nicht der genau definierten Zusammensetzung von Schokolade gemäß der Kakaoverordnung entspricht. Bei derartigen Lebensmitteln kann es sich aber auch um kaffeextrakthaltige oder karamellartige Zusammensetzungen mit entsprechendem Fettgehalt handeln.

Schokolade wird als Hauptprodukt der Süßwarenindustrie unvermeidlich aus keimhaltiger Rohware hergestellt. Trotz des hohen Keimgehalts auch des Fertigprodukts ist unter normalen Lagerbedingungen jedoch kein Verderb zu erwarten, da die niedrige Wasseraktivität der Schokolade kein Keimwachstum zuläßt. Des weiteren sind die in der Schokolade befindlichen Keime beim Verzehr derselben für den Menschen unschädlich.

Der Keimgehalt der Schokolade wird dann zum Problem, wenn die Schokolade mit solchen Produkten in Kontakt treten soll, die einen hohen Anteil an freiem Wasser aufweisen. Bei solchen Produkten handelt es sich insbesondere um Molkereierzeugnisse, wie beispielsweise Joghurt, Quark, Dickmilch, Pudding oder ähnliches, bzw. andere Desserts, wie zum Beispiel Götterspeise sowie auch Fruchtzubereitungen. Bei derartigen Produkten, die sich zunehmender Beliebtheit erfreuen und bei denen beispielsweise der Wunsch besteht, sie mit Schokostückchen zu versehen, tritt bereits nach vergleichsweise kurzer Lagerzeit - auch bei relativ niedrigen Temperaturen - ein mikrobieller Verderb des Produkts ein. Aus den vorgenannten Gründen hat sich die Verwendung von Schokoladenstückchen oder ähnlich zusammengesetzten Partikeln in Lebensmitteln mit hohem Wassergehalt nicht durchsetzen können.

DE 3111352 beschreibt die Sterilisation von flüssigen und pastösen Massen, insbesondere Kakaomassen, wobei die Masse durch kontinuierliche Förderung gestaut und in der Staumasse durch innere Reibung eine Temperatur von 100 bis ca. 150°C zur Entkeimung erzeugt wird.

Der Erfindung liegt die Aufgabe zugrunde, ein Verfahren zur Sterilisation eines bei Raumtemperatur festen Lebensmittels vorzuschlagen, um das derart behandelte Lebensmittel, bei-spielsweise in kleinstückiger Form, wasserhaltigen Lebensmitteln, wie beispielsweise Fruchtzubereitungen, Molkereiprodukte wie Joghurt, Frischkäse, süße Desserts zusetzen zu können.

Erfindungsgemäß wird diese Aufgabe durch ein Verfahren mit den folgenden Verfahrensschritten gelöst:
a) Das Lebensmittel wird auf eine Temperatur T₁ oberhalb seiner Schmelztemperatur T_{S} erwärmt.
b) Während eines Aufheizzeitraums wird Wasserdampf in feinstverteilter Form von außen in das flüssige Lebensmittel eingebracht und dieses auf eine Temperatur T₂ erhitzt, wodurch in dem Lebensmittel enthaltene Mikroorganismen und deren Dauerformen (Sporen) abgetötet werden.
c) Zumindest während eines Teils des Aufheizzeitraums wird das Lebensmittel unter einen gegenüber dem Atmosphärendruck erhöhten Druck p₁ gesetzt.
d) Der Wassergehalt des Lebensmittels wird wieder auf einen Wert von weniger als 5 Gew.-% vermindert.

Mit dem Verfahren gemäß der Erfindung läßt sich eine sehr zuverlässige Sterilisation des Lebensmittels erreichen, das während der Behandlung in flüssiger Form vorliegt. Das Zusammenwirken von Druck und Temperatur sowie das feuchte Milieu infolge der Wasserdampfzusetzung bewirken insbesondere auch eine garantierte Abtötung von Bakteriensporen, die prinzipiell vergleichsweise resistent sind.

Bei Untersuchungen mit Schokolade, die nach dem erfindungsgemäßen Verfahren sterilisiert wurde, konnte festgestellt werden, daß damit versetzte Molkereierzeugnisse in ihrer Haltbarkeit gegenüber nicht mit Schokolade versetzten identischen Produkten unverändert war.

Dieses Ergebnis wurde auch durch eine Vielzahl von Sterilisationansätzen bestätigt, bei denen mit Hilfe einer sogenannten CASO-Bouillon nach 10 Tagen Bebrütungszeit die Sterilqualität der erfindungsgemäß behandelten Schokolade nachgewiesen werden konnte. Der Anfangskeimgehalt der zu sterilisierenden Schokolade lag bezüglich des Bakteriums "Bacillus subtilis IV" bei ca. 6 •10⁵ KB E/g und bezüglich des Bakteriums "Bacillus stearothermophilus VII" bei 4•10⁴ KBE/g.

Besonders vorteilhaft ist es, wenn das Lebensmittel nach dem Aufheizzeitraum und Erreichen der Temperatur T₂ während eines sich anschließenden Heißhaltezeitraums auf der Temperatur T₂ gehalten wird. Auf diese Weise kann durch die Dauer der Temperatureinwirkung eine sichere Keimabtötung gewährleistet werden, ohne daß die Maximaltemperatur solche Werte erreicht, bei denen eine Produktschädigung eintritt.

Die Erfindung weiter ausgestaltend wird vorgeschlagen, daß während des gesamten Aufheizzeitraums Wasserdampf in das Lebensmittel eingebracht wird. Hierdurch wird ein besonders kurzer Aufheizzeitraum ermöglicht, da mit Hilfe des Wasserdampfs eine sehr große Energiemenge in das flüssige Lebensmittel eingebracht werden kann.

Nach Erreichen der Temperatur T₂, die während des anschließenden Heißhaltezeitraums konstant gehalten werden soll, können die Wärmeverluste der zu sterilisierenden Lebensmittelmenge durch eine intermittierende Wasserdampfzugabe ausgeglichen werden.

Alternativ hierzu bzw. auch in Ergänzung ist vorgesehen, daß das Lebensmittel über beheizbare Kontaktflächen auch indirekt erhitzt wird, was sich insbesondere während des Heißhaltezeitraums anbietet, da die benötigten Wärmemengen in dieser Phase nicht sehr groß sind.

Um die Aufheizphase weiter zu verkürzen, kann es sinnvoll sein, das Lebensmittel auch während des Aufheizzeitraums indirekt zu erhitzen.

Um eine möglichst homogene Temperaturverteilung in dem zu sterilisierenden Lebensmittel zu gewährleisten, wird gemäß einer Ausgestaltung des Verfahrens vorgeschlagen, das Lebensmittel zumindest während des Einbringens des Wasserdampfes zu durchmischen.

Wenn das Lebensmittel insbesondere mechanisch durchmischt wird, läßt sich auch bei einer indirekten Beheizung über Kontaktflächen ein "Anbrennen" infolge lokaler Überhitzungszonen zuverlässig verhindern.

Eine besonders vorteilhafte Ausgestaltung der Erfindung sieht vor, daß die Durchmischung mit Hilfe mindestens einer rotierenden Dissolverscheibe erfolgt, unterhalb der der Wasserdampf mit Hilfe mindestens einer Düse eingebracht wird.

Die mechanische Durchmischung des Lebensmittels erfolgt vorteilhafterweise mit Hilfe eines sich entlang einer Behälterwand bewegenden Schaberrührwerks, um dort ein Festsetzen sowie örtliche Überhitzungszonen zu vermeiden.

Sinnvollerweise wird der Wasserdampf als Sattdampf in das Lebensmittel eingebracht.

Wie anhand von Versuchen herausgefunden werden konnte, betragen der Aufheizzeitraum und der Heißhaltezeitraum insgesamt bevorzugterweise zwischen 3 und 30 Minuten, wobei ein Zeitraum zwischen 5 und 15 Minuten als optimal anzusehen ist.

Die Temperatur T₂ am Ende des Aufheizzeitraums bzw. während des Heißhaltezeitraums beträgt vorteilhafterweise zwischen 100°C und 140°C. Oberhalb der letztgenannten Temperatur kommt es zu einer Überhitzung des Lebensmittels, das aus diesem Grunde dann nicht mehr verwendbar wäre.

Optimale sensorische Eigenschaften des Lebensmittels lassen sich erhalten und gleichzeitig eine sichere Keimabtötung erreichen, wenn die Temperatur T₂ zwischen 115°C und 130°C beträgt.

Der Druck p₁ liegt bevorzugterweise zwischen 2 bar und 4 bar - jeweils absolut gemessen.

Eine besonders schnelle Entfernung des während des Sterilisationsverfahrens in das Lebensmittel eingebrachten Wassers geschieht durch Anlegen eines Vakuums.

Die zur Verfahrensdurchführung erforderlichen Investitionen sind vergleichsweise niedrig, wenn das Verfahren diskontinuierlich mit einer bestimmten Menge des Lebensmittels durchgeführt wird. Alternativ hierzu ist insbesondere bei sehr großen Produktionsmengen auch eine kontinuierliche Durchführung des Verfahrens möglich, wobei der Anlagenaufwand jedoch größer ist.

Das erfindungsgemäße Verfahren eignet sich insbesondere für Schokolade und kakaohaltige oder kaffeextrakthaltige Massen.

Das Verfahren gemäß der Erfindung wird nachfolgend anhand eines exemplarischen Ablaufs näher erläutert:

Zur Durchführung des erfindungsgemäßen Verfahrens dient ein geschlossener, doppelmanteliger Druckbehälter, dessen Zwischenraum zwischen Innenmantel und Außenmantel mit Dampf beheizbar ist. Des weiteren ist der Druckbehälter mit einem üblichen Schaberrührwerk und einer als Homogenisierungseinheit dienenden Dissolverscheibe ausgestattet. Die Antriebswelle der Dissolverscheibe und die Mittelachse des zylindrischen Druckbehälters verlaufen koaxial zueinander. Unterhalber der Dissolverscheibe sind Düsen zur Einleitung des Wasserdampfs (Direktdampf) angeordnet.

Die Einbringung der Bestandteile des Lebensmittels - im vorliegenden Fall Schokolade - erfolgt im festen Zustand. Nach dem Einarbeiten der Zutaten wird die Schokolade mit Hilfe der Mantelheizung auf 80°C angewärmt. Danach erfolgt durch Einleitung von Direktdampf - bei weiterhin aktiver Mantelheizung - die Erhitzung auf Sterilisationstemperatur von 125 °C. Dabei wird der Dampf über die Düse direkt auf die schnell rotierende Dissolverscheibe versprüht.

Die Dauer des Erhitzungsvorgangs beträgt ca. 3 bis 4 Minuten. Die Dissolverscheibe und das parallel mitlaufende Rührwerk sorgen für eine gute Verteilung des Dampfs bzw. Kondensats (Wasser), das auf diese Weise fein dispers in der Schokolade vorliegt. Der hierbei im Druckbehälter auftretende Absolutdruck beträgt ca. 3 bar.

Nach Erreichen der Soll-Temperatur wird bei weiter laufendem Rührwerk das Wasser-Schokoladengemisch für weitere 5 Minuten auf Soll-Temepratur, d.h.125°C, gehalten.

Der Sterilisationseffekt, d.h. die Abtötung der Mikroorganismen und ihrer Dauerformen (Sporen), beruht auf der Erhöhung der Wasseraktivität in Verbindung mit der bei der Kondensation freiwerdenden Energie.

Nach Ablauf der fünfminütigen Heißhaltezeit erfolgt durch Anlegen eines Vakuums das Ausdampfen des Wassers. Hierbei kühlt sich die Schokolade auf 58 bis 60°C ab und wird anschließend in einen sterilen Vorratstank gepumpt.

Die Wirksamkeit des Verfahrens wurde überprüft, indem mit dem mesophilen Endosporenbildner "Bacillus subtilis" als Testkeim versporte Schokolade unter Einhaltung der vorgenannten Verfahrensparameter sterilisiert wurde. Die maximale Vorversporung betrug ca. 10⁶ Sporen je Gramm Schokolade. Nach erfolgter Sterilisation dieser kontaminierten Schokolade war ein Nachweis des Keims nicht mehr möglich, wobei die Nachweisgrenze bei 10 Keinem pro Gramm liegt.

Aufgrund der Tatsache, daß der thermoresistente Testkeim "Bacillus subtilis" unter eine Nachweisgrenze abgetötet wurde (5-D-Konzept), kann bei einer durchschnittlichen Anfangsverkeimung der einzusetzenden Rohstoffe von maximal 10⁴ KBE/g mit absoluter Sicherheit davon ausgegangen werden, daß bei Anwendung des erfindungsgemäßen Verfahrens Schokolade so sterilisiert werden kann, daß eine Keimfreiheit vorliegt, und die Schokolade dennoch auch hohen geschmacklichen und sensorischen Anforderungen genügen kann.

## Patentansprüche

1. Verfahren zur Sterilisation eines bei Raumtemperatur festen Lebensmittels, das mindestens Fett und Zucker enthält und dessen Wassergehalt weniger als 5 Gew.-% beträgt, mit den folgenden Verfahrensschritten:
a) Das Lebensmittel wird auf eine Temperatur T₁ oberhalb seiner Schmelztemperatur T_{S} erwärmt.
b) Während eines Aufheizzeitraums wird Wasserdampf in feinstverteilter Form von außen in das flüssige Lebensmittel eingebracht und dieses auf eine Temperatur T₂ erhitzt, wodurch in dem Lebensmittel enthaltene Mikroorganismen und deren Dauerformen (Sporen) abgetötet werden.
c) Zumindest während eines Teils des Aufheizzeitraums wird das Lebensmittel unter einen gegenüber dem Atmosphärendruck erhöhten Druck p₁ gesetzt.
d) Der Wassergehalt des Lebensmittels wird wieder auf einen Wert von weniger als 5 Gew.-% vermindert.

2. Verfahren nach Anspruch 1, **dadurch gekennzeichnet, daß** das Lebensmittel nach dem Aufheizzeitraum und Erreichen der Temperatur T₂ während eines sich anschließenden Heißhaltezeitraums auf der Temperatur T₂ gehalten wird.

3. Verfahren nach Anspruch 1 oder 2, **dadurch gekennzeichnet, daß** während des gesamten Aufheizzeitraums Wasserdampf in das Lebensmittel eingebracht wird.

4. Verfahren nach einem der Ansprüche 1 bis 3, **dadurch gekennzeichnet, daß** das Lebensmittel über beheizbare Kontaktflächen auch indirekt erhitzt wird.

5. Verfahren nach Anspruch 4, **dadurch gekennzeichnet, daß** das Lebensmittel während des Aufheizzeitraums indirekt erhitzt wird.

6. Verfahren nach einem der Ansprüche 1 bis 5, **dadurch gekennzeichnet, daß** das Lebensmittel zumindest während des Einbringens des Wasserdampfes durchmischt wird.

7. Verfahren nach Anspruch 6, **dadurch gekennzeichnet, daß** das Lebensmittel mechanisch durchmischt wird.

8. Verfahren nach Anspruch 7, **dadurch gekennzeichnet, daß** die Durchmischung mit Hilfe mindestens einer rotierenden Dissolverscheibe erfolgt, unterhalb welcher der Wasserdampf mit Hilfe mindestens einer Düse eingebracht wird.

9. Verfahren nach Anspruch 7 oder 8, **dadurch gekennzeichnet, daß** die Durchmischung mit Hilfe eines sich entlang einer Behälterwand bewegenden Schaberrührwerks erfolgt.

10. Verfahren nach einem der Ansprüche 1 bis 9, **dadurch gekennzeichnet, daß** der Wasserdampf als Sattdampf eingebracht wird.

11. Verfahren nach einem der Ansprüche 1 bis 10, **dadurch gekennzeichnet, daß** der Aufheizzeitraum und der Heißhaltezeitraum insgesamt zwischen 3 und 30 Minuten betragen.

12. Verfahren nach Anspruch 11, **dadurch gekennzeichnet, daß** der Aufheizzeitraum und der Heißhaltezeitraum insgesamt zwischen 5 und 15 Minuten betragen.

13. Verfahren nach einem der Ansprüche 1 bis 12, **dadurch gekennzeichnet, daß** die Temperatur T₂ zwischen 100° C und 140° C beträgt.

14. Verfahren nach Anspruch 13, **dadurch gekennzeichnet, daß** die Temperatur T₂ zwischen 115°C und 130° C beträgt.

15. Verfahren nach Anspruch 1 bis 14, **dadurch gekennzeichnet, daß** der Druck p₁ zwischen 2 bar und 4 bar - absolut gemessen - beträgt.

16. Verfahren nach Anspruch 1 bis 15, **dadurch gekennzeichnet, daß** die Verminderung des Wassergehaltes des sterilisierten Lebensmittels durch Anlegen eines Vakuums erfolgt.

17. Verfahren nach einem der Ansprüche 1 bis 16, **dadurch gekennzeichnet, daß** das Verfahren diskontinuierlich mit einer bestimmten Menge des Lebensmittels durchgeführt wird.

18. Verfahren nach einem der Ansprüche 1 bis 16, **dadurch gekennzeichnet, daß** das Verfahren kontinuierlich durchgeführt wird.

19. Verfahren nach den Ansprüchen 1 bis 18, **dadurch gekennzeichnet, daß** das Lebensmittel Schokolade oder eine kakaohaltige oder kaffeextrakthaltige Masse ist.

## Claims

1. A process for sterilising a foodstuff which is solid at room temperature, which contains at least fat and sugar, and the water content of which is less than 5 % by weight, comprising the following process steps:
a) the foodstuff is heated to a temperature T1 above its melting temperature TS,
b) during a heat-up period steam is introduced from the outside and in very finely divided form into the liquid foodstuff and heats the latter to a temperature T2, whereby micro-organisms, and durable forms thereof (spores), which are contained in the foodstuff, are killed,
c) the foodstuff is placed under a pressure p1 which is higher than atmospheric pressure during at least part of the heat-up period,
b) the water content of the foodstuff is reduced again to a value of less than 5 % by weight.

2. A process according to claim 1, **characterised in that** after the heat-up period and after it has reached temperature T2 the foodstuff is held at temperature T2 for a subsequent high-temperature holding period.

3. A process according to claims 1 or 2, **characterised in that** steam is introduced into the foodstuff over the entire heat-up period.

4. A process according to any one of claims 1 to 3, **characterised in that** the foodstuff is also heated indirectly via contact faces which can be heated.

5. A process according to claim 4, **characterised in that** the foodstuff is indirectly heated during the heat-up period.

6. A process according to any one of claims 1 to 5, **characterised in that** the foodstuff is inter-mixed during the introduction of the steam at least.

7. A process according to claim 6, **characterised in that** the foodstuff is mechanically inter-mixed.

8. A process according to claim 7, **characterised in that** inter-mixing is effected by means of at least one rotating dissolver disc below which the steam is introduced by means of at least one nozzle.

9. A method according to claims 7 or 8, **characterised in that** inter-mixing is effected by means of at least one scraper blade agitator which moves along a vessel wall.

10. A process according to any one of claims 1 to 9, **characterised in that** the steam is introduced as saturated steam.

11. A process according to any one of claims 1 to 10, **characterised in that** the heat-up period and the high-temperature holding period amount to between 3 and 30 minutes in total.

12. A process according to claim 11, **characterised in that** the heat-up period and the high-temperature holding period amount to between 5 and 15 minutes in total.

13. A process according to any one of claims 1 to 12, **characterised in that** temperature T2 is between 100°C and 140°C.

14. A process according to claim 13, **characterised in that** temperature T2 is between 115 °C and 130°C.

15. A process according to claims 1 to 14, **characterised in that** pressure p1 is between 2 bar absolute and 4 bar absolute.

16. A process according to claims 1 to 15, **characterised in that** reduction of the water content of the sterilised foodstuff is effected by applying a vacuum.

17. A process according to any one of claims 1 to 16, **characterised in that** the process is carried out batch-wise on a defined amount of foodstuff.

18. A process according to any one of claims 1 to 16, **characterised in that** the process is carried out continuously.

19. A process according to any one of claims 1 to 18, **characterised in that** the foodstuff is chocolate or a material which contains cocoa or coffee extract.

## Revendications

1. Procédé de stérilisation d'une denrée solide à la température ambiante, qui contient au moins de la matière grasse et du sucre et dont la teneur en eau est inférieure à 5% en poids, comprenant les stades suivants :
a) On porte la denrée à une température T₁ supérieure à son point T_{S} de fusion.
b) Pendant un laps de temps de chauffage, on introduit sous forme finement divisée de l'extérieur de la vapeur d'eau dans la denrée liquide et on porte celle-ci à une température T₂ en sorte que les micro-organismes contenus dans la denrée et leurs formes permanentes (spores) sont tués.
c) On met au moins pendant une partie du laps de temps de chauffage la denrée sous une pression P₁ plus grande que la pression atmosphérique.
d) On diminue à nouveau la teneur en eau de la denrée à une valeur inférieure à 5% en poids.

2. Procédé suivant la revendication 1, **caractérisé en ce que** l'on maintient la denrée, après le laps de temps de chauffage et après avoir atteint la température T₂, à la température T₂ pendant un laps de temps du maintien à l'état chaud qui suit.

3. Procédé suivant la revendication 1 ou 2, **caractérisé en ce que** l'on introduit de la vapeur d'eau dans la denrée pendant tout le laps de temps de chauffage.

4. Procédé suivant l'une des revendications 1 à 3, **caractérisé en ce que** l'on chauffe la denrée aussi de manière indirecte par des surfaces de contact qui peuvent être chauffées.

5. Procédé suivant la revendication 4, **caractérisé en ce que** l'on chauffe la denrée de manière indirecte pendant le laps de temps de chauffage.

6. Procédé suivant l'une des revendications 1 à 5, **caractérisé en ce que** l'on brasse la denrée au moins pendant l'introduction de la vapeur d'eau.

7. Procédé suivant la revendication 6, **caractérisé en ce que** l'on brasse la denrée de manière mécanique.

8. Procédé suivant la revendication 7, **caractérisé en ce que** l'on effectue le brassage à l'aide d'au moins un disque rotatif de dissolution sous lequel on introduit la vapeur d'eau à l'aide d'au moins une buse.

9. Procédé suivant la revendication 7 ou 8, **caractérisé en ce que** l'on effectue le brassage à l'aide d'un agitateur à racloir se déplaçant le long d'une paroi de cuve.

10. Procédé suivant l'une des revendications 1 à 9, **caractérisé en ce que** l'on introduit la vapeur d'eau sous forme de vapeur saturée.

11. Procédé suivant l'une des revendications 1 à 10, **caractérisé en ce que** le laps de temps de chauffage et le laps de temps de maintien à l'état chaud sont en tout compris entre 3 et 30 minutes.

12. Procédé suivant la revendication 11, **caractérisé en ce que** le laps de temps de chauffage et le laps de temps de maintien à l'état chaud sont en tout compris entre 5 et 15 minutes.

13. Procédé suivant l'une des revendications 1 à 12, **caractérisé en ce que** la température T₂ est comprise entre 100°C et 140°C.

14. Procédé suivant la revendication 13, **caractérisé en ce que** la température T₂ est comprise entre 115°C et 130°C.

15. Procédé suivant l'une des revendications 1 à 14, **caractérisé en ce que** la pression P₁ est comprise entre 2 bars et 40 bars mesurée en valeur absolue.

16. Procédé suivant l'une des revendications 1 à 15, **caractérisé en ce que** la diminution de la teneur en eau de la denrée stérilisée s'effectue par application d'un vide.

17. Procédé suivant l'une des revendications 1 à 16, **caractérisé en ce que** l'on effectue le procédé en discontinu avec une quantité donnée de la denrée.

18. Procédé suivant l'une des revendications 1 à 16, **caractérisé en ce que** l'on effectue le procédé en continu.

19. Procédé suivant l'une des revendications 1 à 18, **caractérisé en ce que** la denrée est du chocolat ou une composition contenant du cacao ou contenant un extrait de café.
